# EUROPÄISCHE PATENTANMELDUNG

(11) **EP 4 403 495 A1**
(43) Veröffentlichungstag der Anmeldung: **24.07.2024**
(21) Anmeldenummer: 24153108.6
(22) Anmeldetag: 22.01.2024
(51) Int. Cl.: B65G 17/38, B65G 21/18, B65G 39/20

(54) **TRANSPORTSYSTEM**

(30) Priorität: 23.01.2023 DE 102023101554
(71) Anmelder: TAKTOMAT kurvengesteuerte Antriebssysteme GmbH, 86554 Pöttmes (DE)
(72) Erfinder: Hofstetter, Norbert, 86676 Hollenbach (DE); Hofstetter, Michael, 86676 Hollenbach (DE)
(74) Vertreter: Glück Kritzenberger Patentanwälte PartGmbB

(57) **Zusammenfassung**

Die vorliegende Erfindung bezieht sich auf ein Transportsystem (1) zur Beförderung von Gegenständen entlang einer Transportstrecke (TS). Erfindungsgemäß ist vorgesehen, dass an einem Einlauf (5) eines Verbindungsabschnittes (VB) eine erste Laufrolle (34, 36) in einem ersten Anlageabschnitt (30.11, 31.11) einer ersten Führungsfläche (30.1, 31.1) und eine zweite Laufrolle (35, 37) in einem zweiten Anlageabschnitt (30.21, 31.21) einer zweiten Führungsfläche (30.2, 31.2) anliegen und zueinander vorgespannt geführt sind, wobei der erste und zweite Anlageabschnitt (30.11 und 30.21 bzw. 31.11 und 31.21) entlang der Achse (GAS) zueinander versetzt und einander gegenüberliegend vorgesehen sind und dass am Auslauf (6) des Verbindungsabschnittes (VB) die erste Laufrolle (34, 36) in einem dritten Anlageabschnitt (30.31, 31.31) der ersten Führungsfläche (30.1, 31.1) und die zweite Laufrolle (35, 37) in einem vierten Anlageabschnitt (30.41, 31.41) der zweiten Führungsfläche (30.2, 31.2) anliegen und zueinander vorgespannt geführt sind, wobei der dritte und vierte Anlageabschnitt (30.31 und 30.41 bzw. 31.31 und 31.41) entlang der Achse (GAS) zueinander versetzt und einander gegenüberliegend vorgesehen sind.

## Beschreibung

Die Erfindung bezieht sich auf ein Transportsystem zur Beförderung von Gegenständen entlang einer Transportstrecke.

Transportsysteme mit umlaufenden Transportpaletten beispielsweise in Form von Werkstückträgern die zu einer geschlossenen Schlaufe kettenartig miteinander verbundenen sind oder bei denen die Werkstückträger einzeln und individuell angetrieben werden, sind in verschiedenen Ausführungen und für unterschiedliche Anwendungen bekannt.

Auch sind aus dem Stand der Technik bereits Transportsysteme bekannt, bei denen der Werkstückträger, der auch als Transportpalette bezeichnet wird, entlang einer Transportstrecke bewegt wird, deren Bewegungsbahn zumindest abschnittsweise einen konkaven Verlauf aufweist, so dass insbesondere die Transportpaletten dazu ausgebildet sein müssen, an der durch ihre jeweilige Oberseite gebildete Transportebene diese konkave Bewegungsbahn zur Beförderung der Gegenstände bereitzustellen. In der Regel ist hierfür eine beidseitige Führungseinrichtung der Transportpaletten vorgesehen, die die Transportpaletten parallel der Bewegungsbahn und damit insbesondere auch parallel der durch die Transportpaletten gebildeten Transportebene, führt.

Ferner ist aus der auf die Anmelderin zurückgehenden Druckschrift DE 10 2014 116 425 A1 bereits ein Transportsystem zur Beförderung von Gegenständen entlang einer Transportstrecke bekannt geworden, bei dem entlang der Transportstrecke zumindest zwei Abschnitte mit unterschiedlicher Krümmung aufeinander folgen, nämlich Abschnitte mit einer konkaven und einer konvexen Krümmung der Bewegungsbahn der Transportstrecke.

Beispielsweise erfolgt auf dem wenigstens einen konkaven Abschnitt der Bewegungsbahn der Transportpaletten eines derartigen Transportsystems eine Inspektion und/oder Bearbeitung von auf bzw. an den Transportpaletten angeordneten Gegenständen oder Werkstücken. Vorzugsweise erfolgt aber an diesem konkaven Abschnitt die Inspektion oder Untersuchung eines dort angeordneten Gegenstandes oder Körpers, beispielsweise eines tierischen oder menschlichen Körpers zur Erstellung einer medizinischen Diagnose. An den Transportpaletten sind dann Funktionselemente vorgesehen, die diese Inspektion oder medizinische Untersuchung ermöglichen. Die Funktionselemente sind beispielsweise optische Spiegel für ein optisches Abtasten oder Scannen der Oberfläche des betreffenden Körpers oder aber Reflektoren für eine Strahlung eines medizinischen bildgebenden Systems, beispielsweise Reflektoren für eine gebündelte elektromagnetische Strahlung eines MRT-Systems und/oder Reflektoren für Röntgenstrahlung und/oder Ultraschall.

Ferner kann ein solches Transportsystem in Lackieranlagen eingesetzt werden, in denen Lackierung und Aushärtung durch UV-Bestrahlung in verschiedenen Ebenen erfolgt. Dadurch kann der UV-Bestrahlungsbereich bestmöglich vom Lackierbereich abgeschirmt werden, sodass keine unerwünschte Streustrahlung in den Lackierbereich eindringt.

Dies erfordert eine hochpräzise und möglichst toleranzfreie Führung der Transportpaletten entlang der gesamten Länge der Transportstrecke des Transportsystems, also sowohl entlang der konkaven, als auch der konvexen Abschnitte der Bewegungsbahn, aber insbesondere auch entlang der zwischen den konkaven und konvexen Abschnitten vorgesehenen Verbindungsabschnitte.

Ein weiteres, ebenfalls auf die Anmelderin zurückgehendes, Transportsystem zur Beförderung von Gegenständen ist aus der Druckschrift DE 10 2016 108 765 A1 bekannt geworden. In dieser Druckschrift wird eine verspannte Führung der Führungs- und Lagereinrichtungen der Transportpaletten zwischen zwei Führungseinrichtungen entlang eines geradlinigen Abschnitts der Transportstrecke vorgeschlagen.

Aufgabe der Erfindung ist es daher, ein Transportsystem zur Beförderung von Gegenständen entlang einer Transportstrecke aufzuzeigen, welches sich durch eine hochpräzise und nahezu toleranzfreie Führung der Transportpaletten entlang der gesamten Länge der Transportstrecke des Transportsystems, also sowohl entlang der konkaven, als auch der konvexen Abschnitte der Bewegungsbahn, aber insbesondere auch entlang der zwischen den konkaven und konvexen Abschnitten vorgesehenen Verbindungsabschnitte auszeichnet. Zur Lösung dieser Aufgabe ist ein Transportsystem entsprechend dem Patentanspruch 1 ausgebildet. Die Unteransprüche betreffen dabei besonders vorteilhafte Ausführungsvarianten der Erfindung.

Der wesentliche Aspekt der vorliegenden Erfindung ist darin zu sehen, ein Transportsystem zur Beförderung von Gegenständen entlang einer Transportstrecke vorzuschlagen, umfassend wenigstens eine in zumindest einer Transportrichtung entlang einer geschlossenen Bewegungsbahn der Transportstrecke getaktet umlaufend angetriebene Transportpalette.

Dabei können auch mehrere Transportpaletten vorgesehen sein, welche aus einer Vielzahl von über Kettengelenke gelenkig miteinander zu einer geschlossenen Schleife verbundenen Kettenglieder ausbilden und über wenigstens ein Kettenrad in zumindest einer Transportrichtung umlaufend antreibbar sind, wobei die Kettenglieder eben durch die Transportpaletten ausgebildet sind. Beispielsweise kann das wenigstens eine Kettenrad unmittelbar, d.h. getriebelos durch einen Elektromotor, bevorzugt durch einen Torquemotor, in zumindest einer Transportrichtung umlaufend antreibbar sein.

Alternativ kann die Transportpalette auch mittels eines elektromagnetischen Antriebs getaktet umlaufend angetrieben werden. Hierfür kann das Transportsystem den elektromagnetischen Antrieb zum Antreiben der zumindest einen Transportpalette entlang der Bewegungsbahn mittels elektromagnetischer Kräfte umfassen, wobei der elektromagnetische Antrieb eine Vielzahl von ortsfesten Spulenelementen und zumindest einen Permanentmagneten aufweist, wobei die ortsfesten Spulenelemente des elektromagnetischen Antriebs an einer ortsfesten Laufschiene entlang Bewegungsbahn vorgesehen sind und der zumindest eine Permanentmagnet an der zumindest einen Transportpalette vorgesehen ist. Das Transportsystem umfasst also den hierfür die ortsfeste Laufschiene und zumindest einen entlang der Laufschiene bewegbaren Läufer zum Befördern der Gegenstände entlang der Transportstrecke. Der Läufer ist hierbei durch die Transportpalette gebildet. Wie im Detail eine solche als Läufer eines elektromagnetischen Antriebs ausgebildete Transportpalette aufgebaut ist wird in der auf die Anmelderin zurückgehende Druckschrift DE 10 2021 107 189 A1 offenbart. Diesbezügliche Textpassagen der Beschreibung der dort als Läufer bezeichneten Transportpalette der Druckschrift DE 10 2021 107 189 A1 werden durch Verweis zum Gegenstand der vorliegenden Erfindung erklärt und in die hiesige Beschreibung mit einbezogen.

Ferner weist die Bewegungsbahn des erfindungsgemäßen Transportsystems zumindest einen konkaven Bewegungsbahnabschnitt und wenigstens einen konvexen Bewegungsbahnabschnitt für die Transportpalette, sowie einen die Bewegungsbahnabschnitte verbindenden Verbindungsabschnitt auf. Die Angaben "konkav" und "konvex" definieren sich jeweils in Relation zu dem von der "geschlossenen Bewegungsbahn" eingefassten Innenraum bzw. Mittenbereich des Transportsystems gegenüber einem außerhalb der "geschlossenen Bewegungsbahn" liegenden Außenraum. Der Verbindungsabschnitt ist also in anderen Worten in Transportrichtung gesehen zwischen einem konkaven Bewegungsbahnabschnitt und einem konvexen Bewegungsbahnabschnitt, aber auch zwischen einem konvexen Bewegungsbahnabschnitt und einem konkaven Bewegungsbahnabschnitt vorgesehen. Mehr im Detail also immer dann, wenn zwei Abschnitte mit unterschiedlicher Krümmung in Transportrichtung aufeinander folgen.

Hierbei ist die Transportpalette zumindest entlang des Verbindungsabschnittes beidseitig mittels einer ersten und zweiten Führungseinrichtung geführt, wobei die Transportpalette jeweils zumindest eine zwischen der ersten und zweiten Führungseinrichtung verlaufende Achse aufweist, die an einem ersten freien Ende mit einer ersten Führungs- und Lagereinrichtung in der ersten Führungseinrichtung und an einem zweiten freien Ende mit einer zweiten Führungs- und Lagereinrichtung in der zweiten Führungseinrichtung geführt ist.

Die erste und zweite Führungs- und Lagereinrichtung weist jeweils wenigstens eine erste und zweite Laufrolle auf, die zwischen einem Einlauf und einem in Transportrichtung auf den Einlauf nachfolgenden Auslauf des Verbindungsabschnittes zwischen einer ersten und zweiten, einander gegenüberliegenden und parallel zur Achse verlaufenden Führungsfläche der jeweiligen Führungseinrichtung derart geführt sind, dass am Einlauf des Verbindungsabschnittes die erste Laufrolle in einem ersten Anlageabschnitt der ersten Führungsfläche und die zweite Laufrolle in einem zweiten Anlageabschnitt der zweiten Führungsfläche anliegen und zueinander vorgespannt geführt sind, wobei der erste und zweite Anlageabschnitt entlang der Achse zueinander versetzt und einander gegenüberliegend vorgesehen sind, dass am Auslauf des Verbindungsabschnittes die erste Laufrolle in einem dritten Anlageabschnitt der ersten Führungsfläche und die zweite Laufrolle in einem vierten Anlageabschnitt der zweiten Führungsfläche anliegen und zueinander vorgespannt geführt sind, wobei der dritte und vierte Anlageabschnitt entlang der Achse einander versetzt und einander gegenüberliegend vorgesehen sind.

Das Transportsystem ist also in seinem Verbindungsabschnitt so gestaltet, dass die Transportpalette zu jedem Zeitpunkt spielfrei zwischen dem Einlauf und dem Auslauf geführt ist. Insbesondere darf eine Krafteinwirkung in Form von Druckkräften oder Zugkräften senkrecht zur Bewegungsrichtung der Transportpalette keine vertikale Bewegung zur Folge haben.

Bei bisherigen linearen oder rechteckigen Geometrien des Transportsystems wird dies lediglich entlang der geradlinigen Abschnitte durch eine Innen- und Außenführung für die jeweiligen paarweise an jeder Seite der Achse der Transportpaletten angeordneten Rollen erreicht.

Mehr im Detail sieht die bisherige Führung für die Rollen der Achse des Transportpaletten so aus, dass zumindest abschnittsweise entlang der Transportstrecke des Transportsystems beidseitig mittels einer ersten und zweiten Führungseinrichtung geführt sind, bei dem ein Werkstückträger jeweils zumindest eine zwischen der ersten und zweiten Führungseinrichtung verlaufende Achse aufweist, die an einem ersten freien Ende mit einer ersten Führungs- und Lagereinrichtung in der ersten Führungseinrichtung und an einem zweiten freien Ende mit einer zweiten Führungs- und Lagereinrichtung in der zweiten Führungseinrichtung geführt ist, wobei die erste und zweite Führungs- und Lagereinrichtung jeweils wenigstens eine erste und zweite Rolle aufnehmen.

Beim konvex-konkav Kurvenübergang oder konkav-konvex Kurvenübergang der Transportpalette kommt es zu einer neuen Problematik, die mit dem bisherigen Stand der Technik nicht zu lösen ist: Beim Durchlaufen der Führungseinrichtung des Transportsystems muss es einen Wechsel der Drehrichtung der Rollen der Transportpalette beim Übergang zwischen z.B. konvexen und konkaven Bereichen der Kurvenbahn geben. Insbesondere kommt es zu einem Wechsel der Drehrichtung der Rollen in einem Bereich zwischen dem Einlauf und dem Auslauf des Verbindungsabschnittes des erfindungsgemäßen Transportsystems, der seinerseits wiederum zwischen den konkaven und konvexen Bewegungsbahnabschnitt der Bewegungsbahn vorgesehen ist. In diesem Bereich muss die Rolle für einen Drehrichtungswechsel zumindest zeitweise an keiner Führungsfläche des Führungssystems anliegen, muss also völlig frei drehen können. Eine freie Rolle würde jedoch sofort zu einem mechanischen Spiel der Transportpalette bei Zug- oder Druckkräften senkrecht zur Bewegungsrichtung führen.

Vorteilhaft wird dieser Übergang insbesondere dadurch gelöst, dass der erste bis vierte Anlagenabschnitt der ersten und zweiten Führungsfläche entlang des Verbindungsabschnittes zwischen dem Einlauf und dem Auslauf in Transportrichtung derart gestuft ausgebildet ist, dass während einer Bewegung der Transportpalette in Transportrichtung entlang des Verbindungsabschnittes eine jede der Laufrollen von dem entsprechenden ersten und zweiten Anlagenabschnitt freikommt, um eine Drehrichtung der entsprechenden Laufrolle zu ändern, und anschließend an dem dritten und vierten Anlagenabschnitt zur Anlage gelangt, wobei zu jedem Zeitpunkt während der Bewegung der Transportpalette durch den Verbindungsabschnitt stets von beiden Führungs- und Lagereinrichtungen der Transportpalette jeweils immer mindestens eine Rolle für die Positionierung und Fixierung der Transportpalette an einem entsprechenden ersten bis vierten Anlagenabschnitt der ersten und zweiten Führungsfläche kontaktschlüssig anliegt.

Damit wird ein Transportsystem zur Beförderung von Gegenständen geschaffen, welches sich durch eine hochpräzise und nahezu toleranzfreie Führung der Transportpaletten entlang der gesamten Länge der Transportstrecke des Transportsystems, also sowohl entlang der konkaven, als auch der konvexen Abschnitte der Bewegungsbahn, aber insbesondere auch entlang der zwischen den konkaven und konvexen Abschnitten vorgesehenen Verbindungsabschnitte auszeichnet.

Ferner vorteilhaft kann vorgesehen sein, dass der erste und vierte Anlageabschnitt der ersten Führungsfläche der ersten und zweiten Führungseinrichtung entlang der Achse gestuft ausgebildet ist und/oder dass der zweite und dritte Anlageabschnitt der zweiten Führungsfläche der ersten und zweiten Führungseinrichtung entlang der Achse gestuft ausgebildet ist. Die ermöglicht eine logische Trennung der Drehbewegung der ersten Laufrollen zu den zweiten Laufrollen bei gleichzeitig weiterhin möglicher Verspannung der Laufrollen entlang deren Achse. Somit wird eine hochpräzise Führung der Transportpalette möglichst ohne Spiel realisiert.

Ferner vorteilhaft kann vorgesehen sein, dass dadurch gekennzeichnet, dass der erste bis vierte Anlageabschnitt der ersten und zweiten Führungseinrichtung im Bereich des Einlaufs des Verbindungsabschnittes entlang der Achse derart gestuft ausgebildet, dass die jeweils erste Führungsrolle der ersten und zweiten Führungs- und Lagereinrichtung an dem jeweils ersten Anlageabschnitt anliegt und gleichzeitig von dem jeweils dritten Anlageabschnitt freikommt und die jeweils zweite Führungsrolle an dem jeweils zweiten Anlageabschnittes anliegt und gleichzeitig von dem jeweils vierten Anlageabschnittes freikommt. Somit wird eine hochpräzise Führung der Transportpalette möglichst ohne Spiel im Bereich des Einlaufs des Verbindungabschnittes realisiert, die eine gleichzeitig Verspannung entlang der Achse der Transportpaletten ermöglicht.

Ferner vorteilhaft kann vorgesehen sein, dass der erste bis vierte Anlageabschnitt der ersten und zweiten Führungseinrichtung im Bereich des Auslaufs des Verbindungsabschnittes entlang der Achse derart gestuft ausgebildet, dass die jeweils erste Führungsrolle der ersten und zweiten Führungs- und Lagereinrichtung an dem jeweils dritten Anlageabschnitt anliegt und gleichzeitig von dem jeweils ersten Anlageabschnitt freikommt und die jeweils zweite Führungsrolle an dem jeweils vierten Anlageabschnittes anliegt und gleichzeitig von dem jeweils zweiten Anlageabschnittes freikommt. Somit wird eine hochpräzise Führung der Transportpalette möglichst ohne Spiel im Bereich des Auslaufs des Verbindungabschnittes realisiert, die eine gleichzeitig Verspannung entlang der Achse der Transportpaletten ermöglicht.

Ferner vorteilhaft kann vorgesehen sein, dass der erste bis vierte Anlagenabschnitt der ersten und zweiten Führungsfläche entlang des Verbindungsabschnittes zwischen dem Einlauf und dem Auslauf in Transportrichtung rampenförmige Stufenabschnitte aufweisen, die vorzugsweise gradlinig und/oder sinusförmig ausgebildet sind. Durch die rampenförmigen Stufenabschnitte wird ein besonders weicher Übergang zwischen den jeweils gegenüberliegenden Anlagenanschnitten für die daran abrollenden Laufrollen der Transportpalette erreicht.

Gemäß einer nochmals weiter vorteilhaften Ausführungsvariante kann vorgesehen sein, dass der erste bis vierte Anlagenabschnitt der ersten und zweiten Führungsfläche entlang des Verbindungsabschnittes zwischen dem Einlauf und dem Auslauf in Transportrichtung derart rampenförmig gestuft ausgebildet ist, dass während einer Bewegung der Transportpalette in Transportrichtung entlang des Verbindungsabschnittes im Bereich des Einlaufs die ersten Laufrollen an dem ersten Anlageabschnitt anliegen und in einer ersten Drehrichtung drehen und gleichzeitig die zweiten Laufrollen an einem zweiten Anlagenabschnitt anliegen und in einer der ersten Drehrichtung entgegengesetzten zweiten Drehrichtung drehen, bevor die ersten Laufrollen im Bereich der rampenförmigen Stufenabschnitte von dem ersten Anlageabschnitt freikommen, um ihre Drehrichtung in die zweite Drehrichtung zu ändern, indem die ersten Laufrollen nach Durchlaufen der rampenförmigen Stufenabschnitte in kontaktschlüssige Anlage mit dem dritten Anlagenabschnitt gelangen.

Gemäß einer nochmals weiter vorteilhaften Ausführungsvariante kann vorgesehen sein, dass der erste bis vierte Anlagenabschnitt der ersten und zweiten Führungsfläche entlang des Verbindungsabschnittes zwischen dem Einlauf und dem Auslauf in Transportrichtung derart rampenförmig gestuft ausgebildet ist, dass während einer Bewegung der Transportpalette in Transportrichtung entlang des Verbindungsabschnittes im Bereich des Einlaufs die zweiten Laufrollen an dem zweiten Anlageabschnitt anliegen und in einer zweiten Drehrichtung drehen und die ersten Laufrollen an einem ersten Anlagenabschnitt anliegen und in einer der zweiten Drehrichtung entgegengesetzten ersten Drehrichtung drehen, bevor die zweiten Laufrollen im Bereich der rampenförmigen Stufenabschnitte von dem zweiten Anlageabschnitt freikommen, um ihre Drehrichtung in die erste Drehrichtung zu ändern, indem die zweiten Laufrollen nach Durchlaufen der rampenförmigen Stufenabschnitte in kontaktschlüssige Anlage mit dem vierten Anlagenabschnitt gelangen.

Gemäß einer nochmals weiter vorteilhaften Ausführungsvariante kann vorgesehen sein, dass die rampenförmigen Stufenabschnitte der ersten bis vierten Anlagenabschnitts derart ausgebildet sind, dass während einer Bewegung der Transportpalette zwischen dem Einlauf und dem Auslauf des Verbindungsabschnittes zunächst eine Drehrichtungsänderung der ersten Laufrollen von der ersten Drehrichtung in die zweite Drehrichtung vollzogen wird, bevor nach Abschluss der Drehrichtungsänderung der ersten Laufrollen eine Drehrichtungsänderung der zweiten Laufrollen von der zweiten Drehrichtung in die erste Drehrichtung eingeleitet wird.

Gemäß einer nochmals weiter vorteilhaften Ausführungsvariante kann vorgesehen sein, dass sich die rampenförmigen Stufenabschnitte des ersten und dritten Anlagenabschnittes entlang der ersten Hälfte des Verbindungsabschnittes und die rampenförmigen Stufenabschnitte des zweiten und vierten Anlageabschnittes entlang der zweiten Hälfte des Verbindungsabschnittes erstecken.

Gemäß einer nochmals weiter vorteilhaften Ausführungsvariante kann vorgesehen sein, dass der erste und dritte Anlagenabschnitt entlang der ersten Hälfte rampenförmig gestuft und in der zweiten Hälfte geradlinig ausgebildet ist und der zweite und vierte Anlageabschnitt entlang der zweiten Hälfte geradlinig und in der ersten Hälfe rampenförmig gestuft ausgebildet ist.

Gemäß einer nochmals weiter vorteilhaften Ausführungsvariante kann vorgesehen sein, dass der Verbindungsabschnitt zwischen dem konkaven Bewegungsbahnabschnitt und dem konvexen Bewegungsbahnabschnitt und/oder zwischen dem konvexen Bewegungsbahnabschnitt und dem konkaven Bewegungsbahnabschnitt vorgesehen ist.

Gemäß einer nochmals weiter vorteilhaften Ausführungsvariante kann vorgesehen sein, dass die Bewegungsbahn mehrfach gekrümmt und umlenkt über sowohl konvexe Bewegungsbahnabschnitte, als auch konkave Bewegungsbahnabschnitte ausgebildet ist.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1a: in vereinfachter perspektivischer Darstellung eine beispielhafte Ausführungsvariante eines erfindungsgemäßen Transportsystems mit konkaven und konvexen Kurvenbahnabschnitten;
- Fig.lb: in vereinfachter perspektivischer Darstellung eine weitere beispielhafte Ausführungsvariante eines erfindungsgemäßen Transportsystems mit konkaven und konvexen Kurvenbahnabschnitten;
- Fig. 2: in vergrößerter Darstellung einen Teilbereich A der Bahnkurve des Transportsystems gemäß der Figur 1b;
- Fig. 3: in vergrößerter Darstellung einen Teilbereich B der Bahnkurve eines Transportsystems gemäß Figur 1a;
- Fig. 4: in perspektivischer Darstellung eine beispielhafte Ausführungsvariante zweier freigestellter und gelenkig miteinander verbundener Transportpaletten des erfindungsgemäßen Transportsystems;
- Fig. 5: einen Vertikalschnitt des Verbindungsabschnittes im Bereich des Einlaufs mit einer Transportpalette gemäß Figur 4;
- Fig. 6: einen Vertikalschnitt des Verbindungsabschnittes im Bereich des Auslaufs mit einer Transportpalette gemäß Figur 4; und

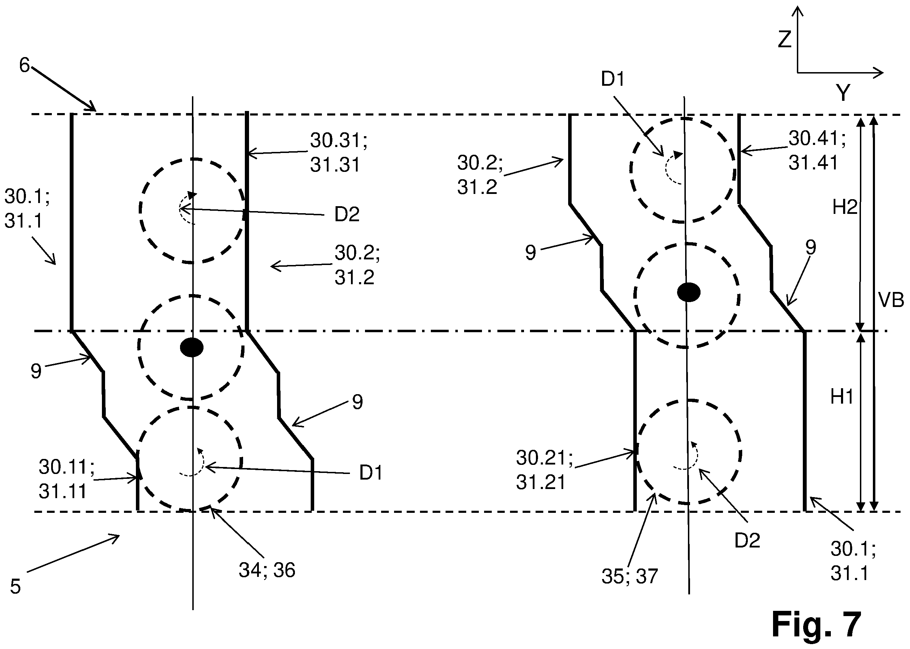

- Fig. 7: eine schematische Darstellung des Verbindungsabschnittes eines erfindungsgemäßen Transportsystems.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Ferner sind zum besseren Verständnis in den Figuren jeweils die senkrecht zueinander verlaufenden Koordinaten- oder Raumachsen X, Y und Z angegeben, von denen bei der dargestellten Ausführungsform die X-Achse und Y-Achse eine horizontale oder im Wesentlichen horizontale XY-Ebene definieren und von denen die Z-Achse senkrecht zu dieser XY-Ebene orientiert ist.

In den Figuren ist mit 1 eine beispielhafte Ausführungsvariante eines Transportsystems zur Beförderung von Gegenständen entlang einer Transportstrecke TS bezeichnet. Dabei umfasst das Transportsystem 1 wenigstens eine in zumindest einer Transportrichtung A entlang einer geschlossenen Bewegungsbahn BA der Transportstrecke TS getaktet umlaufend angetriebene Transportpalette 3. Die Bewegungsbahn BA weist zumindest einen konkaven Bewegungsbahnabschnitt BAK und wenigstens einen konvexen Bewegungsbahnabschnitt BAX für die Transportpalette 3, sowie einen die Bewegungsbahnabschnitte BAK und BAX verbindenden Verbindungsabschnitt VB auf. Der Verbindungsabschnitt VB ist also zwischen einem konkaven Bewegungsbahnabschnitt BAK und einem konvexen Bewegungsbahnabschnitt BAX oder aber zwischen einem konvexen Bewegungsbahnabschnitt BAX und einem konkaven Bewegungsbahnabschnitt BAK vorgesehen. Die Bewegungsbahn BA ist also mehrfach gekrümmt und umlenkt über sowohl konvexe Bewegungsbahnabschnitte BAX, als auch konkave Bewegungsbahnabschnitte BAK.

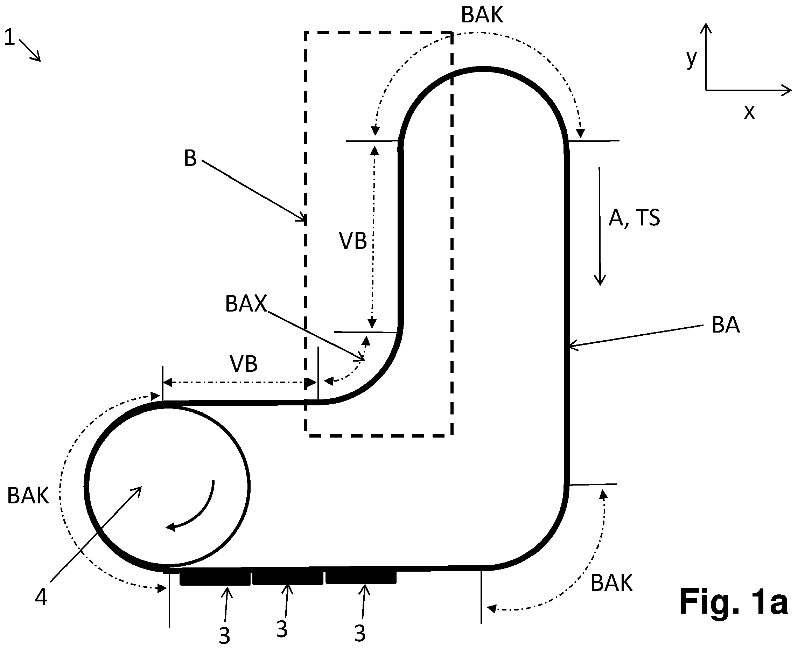

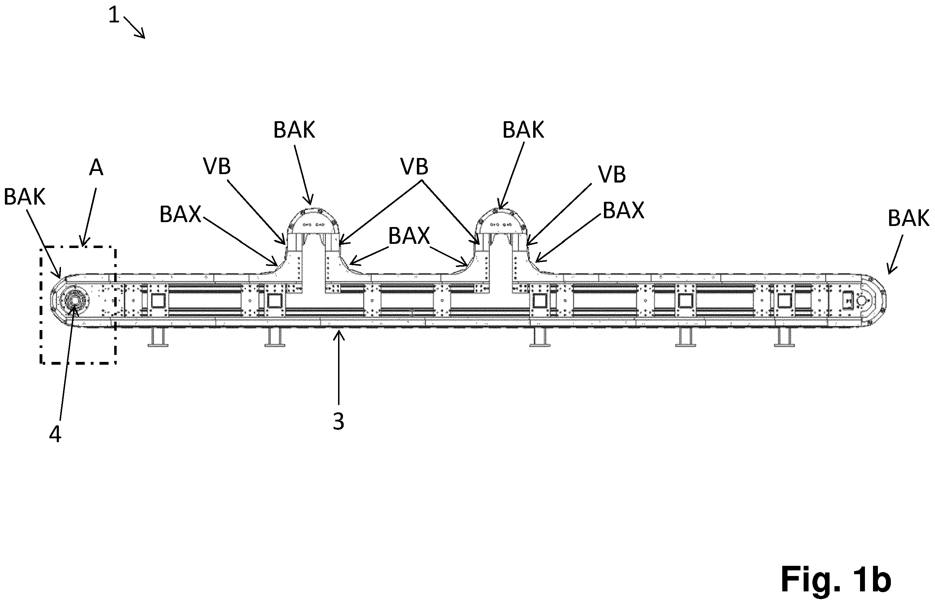

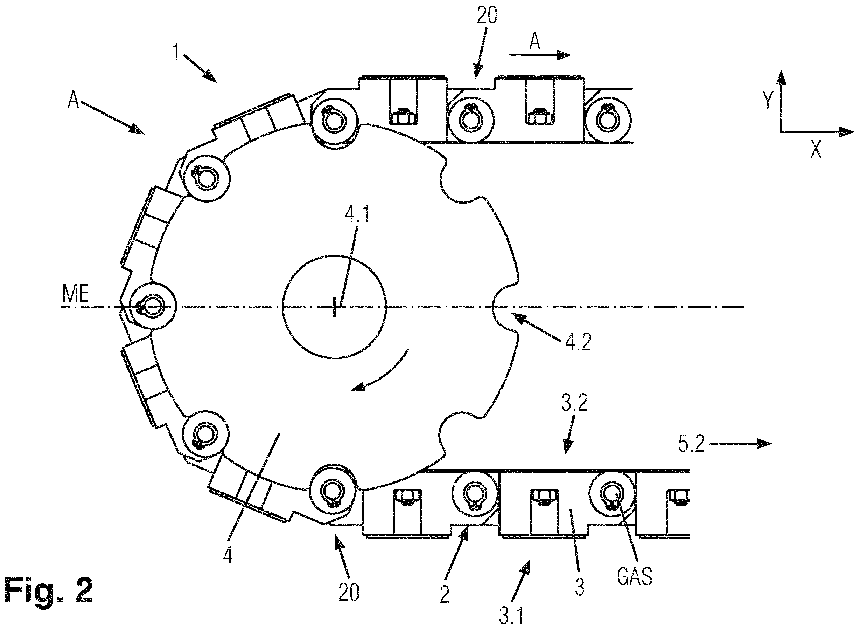

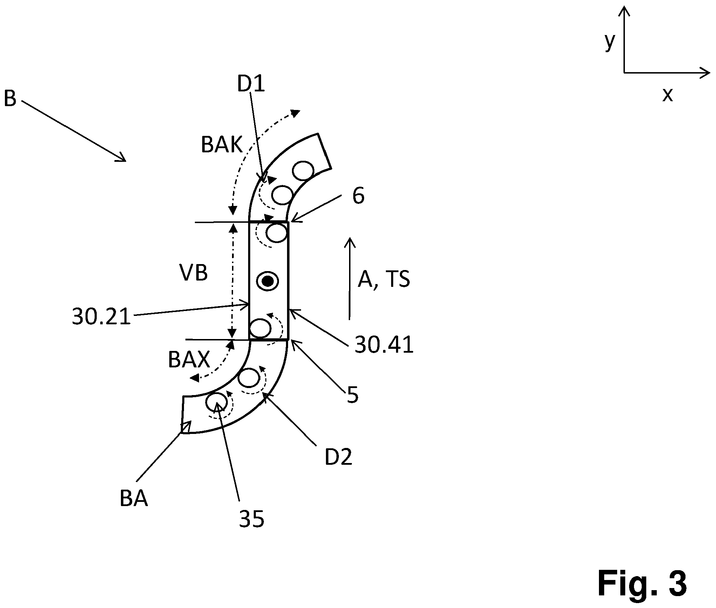

Bei der Ausführungsvariante der Figuren 1 bis 3 umfasst das Transportsystem 1 eine scharnierband- oder kettenartiges Transportelement (Kettenstrang) mit einer Vielzahl von Transportpaletten 3, die über Kettengelenke 20 kettengliederartig und gelenkig miteinander verbunden sind, und zwar zu dem eine geschlossene Schlaufe bildenden Transportelement, welches über beispielsweise ein Kettenrad 4 geführt ist, wie dies in der Figur 2 nähergehend dargestellt ist. Dabei ist das Kettenrad 4 unmittelbar, d.h. getriebelos durch einen Elektromotor EM, bevorzugt durch einen Torquemotor, in zumindest einer Transportrichtung A umlaufend antreibbar. Das Kettenrad 4 ist mit seiner Achse 4.1 in vertikaler Richtung oder im Wesentlichen in vertikaler Richtung, d.h. parallel zur Z-Achse orientiert beispielsweise in einem in den Figuren 1 bis 3 nicht nähergehend dargestellten Maschinenrahmen gelagert.

Die Transportpaletten 3 bilden an ihren jeweiligen Oberseiten 3.1 eine bahnartige Transport- oder Haltefläche aus, an der beispielsweise jeweils eine Aufnahme vorgesehen ist und zwar für die Aufnahme von Gegenständen (z.B. Werkstücke oder andere Produkte), die mit den umlaufenden Transportpaletten 3 in Transportrichtung A bewegt werden.

Dabei ist das Kettenrad 4 der Figur 2 als beispielhaft achtteiliges Kettenrad ausgebildet, so dass diese acht Kettenrad-Eingriff- oder Mitnahmebereiche in Form von Aufnahmen 4.2 aufweist. Jede andere Teilung des Kettenrads größer oder gleich 5 ist Bestandteil der Erfindung. Die Aufnahmen 4.2 des Kettenrades 4 greifen dabei drehpositionsabhängig in eine erste und zweite Führungs- und Lagereinrichtung 32, 33 ein, die an den jeweiligen freien Enden GAS1, GAS2 einer Achse GAS des Kettengelenkes 20 der jeweiligen Transportpaletten 3 vorgesehenen sind. In anderen Worten greifen also die ersten und zweiten Führungs- und Lagereinrichtungen 32, 33, die an den freien Enden der jeweiligen Gelenkachsen GAS des Kettengelenkes 20 vorgesehen sind, drehpositionsabhängig formschlüssig in die Aufnahmen 4.2 des Kettenrades 4 ein, so dass mittels des wenigstens einen angetrieben Kettenrades 4 eine Antriebsbewegung in Transportrichtung A auf die Transportpaletten 3 übertragbar ist.

Dabei kann die jeweilige Achse GAS des entsprechenden Kettengelenkes 20 als einteilige insbesondere einstückige Gelenkstange ausgebildet sein, die sich zwischen ihrem ersten und zweiten freien Ende GAS1, GAS2 derart erstreckt, dass das Kettengelenk 20 jeweils eine zwischen der ersten und zweiten Führungseinrichtung 30, 31 verlaufende Gelenkachse GAS aufweist. Die Achse GAS bildet dabei einen Gelenkbolzen des Kettengelenkes 20 zwischen zwei benachbarten Transportpaletten 3 aus. Bevorzugt kann die Gelenkachse GAS auch drehfest in der Transportpalette 3 aufgenommen bzw. angeordnet sein.

Damit bilden die zum Umfang des Kettenrades 4 hin offenen taschenartigen Aufnahmen 4.2 zwischen sich jeweils einen "Kettenradzahn" aus und besitzen einen Teilungsabstand der gleich der Kettengliedlänge KL zwischen zwei benachbarten Kettengelenken 20 der Kettenglieder der Transportpalette 3 ist, d.h. gleich der Länge jeder Transportpalette 3 bzw. des mittleren Achsabstandes einer durch die Kettengelenke 20 gebildeten Achse GAS zwischen zwei in Transportrichtung A aufeinander folgenden Kettengelenken 20.

Bei eingeschaltetem Elektromotor EM bewegen sich die Transportpaletten 3 somit in Transportrichtung A der geschlossenen Schlaufe des Transportelementes 2 entsprechenden Bewegungsbahn BA.

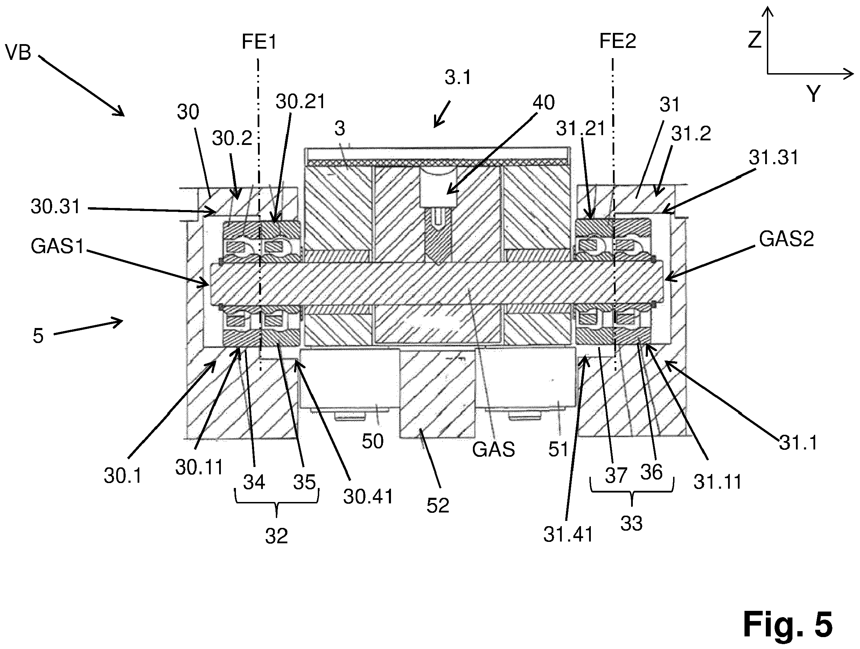

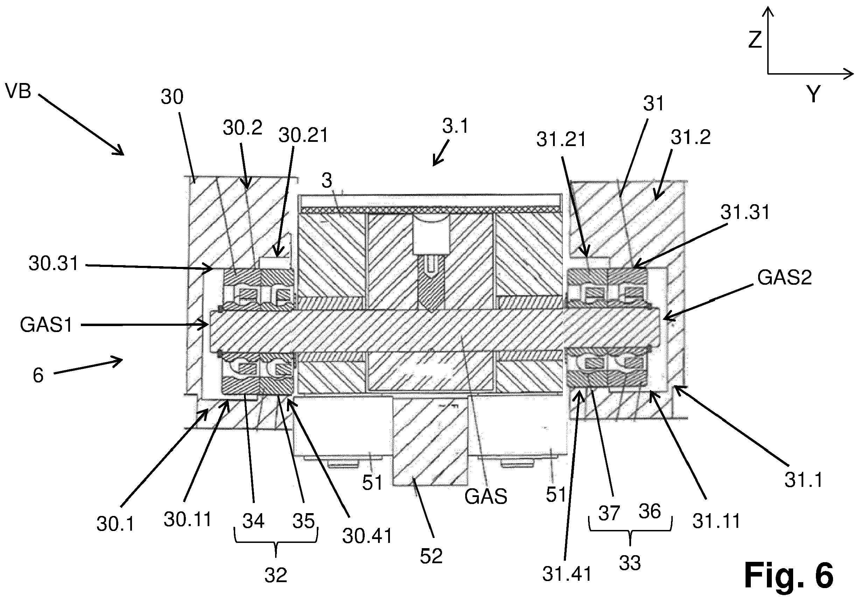

Gemäß der Ausführungsvariante der Figuren sind die Transportpaletten 3 zumindest entlang des Verbindungsabschnittes VB beidseitig mittels einer ersten und zweiten Führungseinrichtung 30, 31 geführt. Eine jede Transportpalette 3 weist dabei zumindest eine zwischen der ersten und zweiten Führungseinrichtung 30, 31 verlaufende Achse GAS auf. Wie insbesondere in der Figuren 5 und 6 gezeigt, ist die jeweilige Achse GAS an einem ersten freien Ende GAS1 mit der ersten Führungs- und Lagereinrichtung 32 in der ersten Führungseinrichtung 30 und an einem zweiten freien Ende GAS2 mit der zweiten Führungs- und Lagereinrichtung 33 in der zweiten Führungseinrichtung 31 geführt und zwar insbesondere in zwei gegenüberliegenden und parallel zur Transportrichtung A sowie damit vorzugsweise lotrecht zur Achse GAS orientierten Führungsebenen FE1, FE2. Mithin bildet die erste und zweite Führungseinrichtung 30, 31 in der Ausführungsvarianten der Figuren 5 und 6 damit eine horizontale Führung für die jeweilige Gelenkachse GAS aus.

Zudem umfassen die erste und zweite Führungs- und Lagereinrichtung 32, 33 hierfür jeweils wenigstens eine erste und zweite Laufrolle 34...37, die vorzugsweise um die Achse GAS drehbar gelagert ausgebildet sein können, und die zwischen einer ersten und zweiten, einander gegenüberliegenden und parallel zur Gelenkachse GAS verlaufenden Führungsfläche 30.1, 30.2 bzw. 31.1, 31.2 der jeweiligen ersten und zweiten Führungseinrichtung 30, 31 geführt sind.

Insbesondere sind dabei die erste und zweite Laufrolle 34, 35 der ersten Führungs- und Lagereinrichtung 32 zwischen den einander gegenüberliegenden und parallel zur Achse GAS verlaufenden Führungsflächen 30.1, 30.2 der ersten Führungseinrichtung 30 und die erste und zweite Laufrolle 36, 37 der zweiten Führungs- und Lagereinrichtung 33 zwischen den einander gegenüberliegenden und parallel zur Gelenkachse GAS verlaufenden Führungsflächen 31.1, 31.2 der zweiten Führungseinrichtung 31 geführt. Somit ist die erste und zweite Laufrolle 34...37 der jeweiligen ersten und zweiten Führungs- und Lagereinrichtung 32, 33 zwischen den jeweiligen Führungsfläche 30.1, 30.2 bzw. 31.1, 31.2 der entsprechenden ersten bzw. zweiten Führungseinrichtung 30, 31 parallel der Transportrichtung A geführt und damit insbesondere lotrecht der Führungsebenen FE1 und FE2.

Dabei ist insbesondere vorgesehen, dass die erste Laufrolle 34 der ersten Führungs- und Lagereinrichtung 32 im Bereich des ersten freien Endes GAS1 um die Achse GAS drehbar an dieser vorgesehen ist, während die zweite Laufrolle 35 auf der dem zweiten freien Ende GAS2 zugewandten Seite der ersten Laufrolle 34 ebenfalls um die Gelenkachse GAS drehbar an dieser vorgesehen ist und zwar der ersten Laufrolle 34 vorzugsweise unmittelbar benachbart anschließend, beispielweise kontaktschlüssig anschließend. Bezogen auf die Längserstreckung der Achse GAS bildet die erste Laufrolle 34 der ersten Führungs- und Lagereinrichtung 32 eine erste äußere Laufrolle 34 und das zweite Laufrolle 35 eine zweite innere Laufrolle 35 aus, die entlang der Achse GAS um näherungsweise die Breite der ersten äußeren Laufrolle 34 in Richtung des zweiten freien Endes GAS2 versetzt an der Achse GAS unmittelbar benachbart der ersten äußeren Laufrolle 34 vorgesehen ist.

Auf Grund des spiegelsymmetrischen Aufbaus ist die erste Laufrolle 36 der zweiten Führungs- und Lagereinrichtung 33 im Bereich des zweiten freien Endes GAS2 um die Achse GAS drehbar vorgesehen, während die zweite Laufrolle 37 auf der dem ersten freien Ende GAS1 zugewandten Seite der ersten Laufrolle 36 ebenfalls um die Gelenkachse GAS drehbar vorgesehen und zwar der ersten Laufrolle 36 vorzugsweise unmittelbar benachbart anschließend, beispielsweise kontaktschlüssig anschließend. Bezogen auf die Längserstreckung der Achse GAS bildet damit die erste Laufrolle 36 der zweiten Führungs- und Lagereinrichtung 33 eine erste äußere Laufrolle 36 und die zweite Laufrolle 37 eine zweite innere Laufrolle 37 aus, die entlang der Gelenkachse GAS um näherungsweise die Breite der ersten äußeren Laufrolle 36 in Richtung des ersten freien Endes GAS1 versetzt an der Achse GAS unmittelbar benachbart der ersten äußeren Laufrolle 36 vorgesehen ist.

Dabei sind ersten und zweiten Laufrollen 34...37 zwischen dem Einlauf 5 und einem in Transportrichtung A auf den Einlauf 5 nachfolgenden Auslauf 6 des Verbindungsabschnittes VB zwischen einer ersten und zweiten, einander gegenüberliegenden und parallel zur Achse GAS verlaufenden Führungsfläche 30.1 und 30.2 bzw. 31.1 und 31.2 der jeweiligen Führungseinrichtung 30, 31 derart geführt, dass am Einlauf 5 des Verbindungsabschnittes VB die erste Laufrolle 34, 36 in einem ersten Anlageabschnitt 30.11, 31.11 der ersten Führungsfläche 30.1, 31.1 und die zweite Laufrolle 35, 37 in einem zweiten Anlageabschnitt 30.21, 31.21 der zweiten Führungsfläche 30.2, 31.2 anliegen und zueinander vorgespannt geführt sind, wobei der erste und zweite Anlageabschnitt 30.11 und 30.21 bzw. 31.11 und 31.21 entlang der Achse GAS zueinander versetzt und einander gegenüberliegend vorgesehen sind, und dass am Auslauf 6 des Verbindungsabschnittes VB die erste Laufrolle 34, 36 in einem dritten Anlageabschnitt 30.31, 31.31 der ersten Führungsfläche 30.1, 31.1 und die zweite Laufrolle 35, 37 in einem vierten Anlageabschnitt 30.41, 31.41 der zweiten Führungsfläche 30.2, 31.2 anliegen und zueinander vorgespannt geführt sind, wobei der dritte und vierte Anlageabschnitt 30.31 und 30.41 bzw. 31.31 und 31.41 entlang der Achse GAS zueinander versetzt und einander gegenüberliegend vorgesehen sind.

Dabei kann der erste bis vierte Anlagenabschnitt 30.11, 30.21, 30.31, 30.41, 31.11 31.21, 31.31, 31.41 der ersten und zweiten Führungsfläche 30.1 und 30.2 bzw. 31.1 und 31.2 entlang des Verbindungsabschnittes VB zwischen dem Einlauf 5 und dem Auslauf 6 in Transportrichtung A derart gestuft ausgebildet sein, dass während einer Bewegung der Transportpalette 3 in Transportrichtung A entlang des Verbindungsabschnittes VB eine jede der Laufrollen 34...37 von dem entsprechenden ersten und zweiten Anlagenabschnitt 30.11 und 30.21 bzw. 31.11 und 31.21 freikommt, um eine Drehrichtung der entsprechenden Laufrolle 34...37 zu ändern, und anschließend an dem dritten und vierten Anlagenabschnitt 30.31 und 30.41 bzw. 31.31 und 31.41 zur Anlage gelangt, wobei zu jedem Zeitpunkt während der Bewegung der Transportpalette 3 durch den Verbindungsabschnitt VB stets von beiden Führungs- und Lagereinrichtungen 32, 32 der Transportpalette 3 jeweils immer mindestens eine Rolle 34...36 für die Positionierung und Fixierung der Transportpalette 3 an einem entsprechenden ersten bis vierten Anlagenabschnitt 30.11, 30.21, 30.31, 30.41, 31.11 31.21, 31.31, 31.41 der ersten und zweiten Führungsfläche 30.1 und 30.2 bzw. 31.1 und 31.2 kontaktschlüssig anliegt.

Vorteilhaft kann vorgesehen sein, dass der erste und vierte Anlageabschnitt 30.11, 31.11 und 30.41, 31.41 der ersten Führungsfläche 30.1, 31.1 der ersten und zweiten Führungseinrichtung 30 und 31 entlang der Achse GAS gestuft ausgebildet ist.

Ferner vorteilhaft kann auch vorgesehen sein, dass der zweite und dritte Anlageabschnitt 30.21, 31.21 und 30.31, 31.31 der zweiten Führungsfläche 30.2, 31.2 der ersten und zweiten Führungseinrichtung 30 und 31 entlang der Achse GAS gestuft ausgebildet ist.

Mehr im Detail ist der erste bis vierte Anlageabschnitt 30.11, 30.21, 30.31, 30.41, 31.11 31.21, 31.31, 31.41 der ersten und zweiten Führungseinrichtung 30, 31 im Bereich des Einlaufs 5 des Verbindungsabschnittes VB entlang der Achse GAS derart gestuft ausgebildet, dass die jeweils erste Führungsrolle 34, 36 der ersten und zweiten Führungs- und Lagereinrichtung 32, 33 an dem jeweils ersten Anlageabschnitt 30.11, 31.11 anliegt und gleichzeitig von dem jeweils dritten Anlageabschnitt 30.31, 31.31 freikommt - also frei dreht - und die jeweils zweite Führungsrolle 35, 37 an dem jeweils zweiten Anlageabschnittes 30.21, 31.21 anliegt und gleichzeitig von dem jeweils vierten Anlageabschnittes 30.41, 31.41 freikommt - also frei dreht.

Mehr im Detail ist der erste bis vierte Anlageabschnitt 30.11, 30.21, 30.31, 30.41, 31.11 31.21, 31.31, 31.41 der ersten und zweiten Führungseinrichtung 30, 31 im Bereich des Auslaufs 6 des Verbindungsabschnittes VB entlang der Achse GAS derart gestuft ausgebildet, dass die jeweils erste Führungsrolle 34, 36 der ersten und zweiten Führungs- und Lagereinrichtung 32, 33 an dem jeweils dritten Anlageabschnitt 30.31, 31.31 anliegt und gleichzeitig von dem jeweils ersten Anlageabschnitt 30.11, 31.11 freikommt - also frei dreht - und die jeweils zweite Führungsrolle 35, 37 an dem jeweils vierten Anlageabschnittes 30.41, 31.41 anliegt und gleichzeitig von dem jeweils zweiten Anlageabschnittes 30.21, 31.21 freikommt - also frei dreht.

Vorteilhaft kann der erste bis vierte Anlagenabschnitt 30.11, 30.21, 30.31, 30.41, 31.11 31.21, 31.31, 31.41 der ersten und zweiten Führungsfläche 30.1 und 30.2 bzw. 31.1 und 31.2 entlang des Verbindungsabschnittes VB zwischen dem Einlauf 5 und dem Auslauf 6 in Transportrichtung A rampenförmige Stufenabschnitte 9 aufweisen, die vorzugsweise gradlinig und/oder sinusförmig ausgebildet sind.

Mehr im Detail ist der erste bis vierte Anlagenabschnitt 30.11, 30.21, 30.31, 30.41, 31.11 31.21, 31.31, 31.41 der ersten und zweiten Führungsfläche 30.1 und 30.2 bzw. 31.1 und 31.2 entlang des Verbindungsabschnittes VB zwischen dem Einlauf 5 und dem Auslauf 6 in Transportrichtung A derart rampenförmig gestuft ausgebildet, dass während einer Bewegung der Transportpalette 3 in Transportrichtung A entlang des Verbindungsabschnittes VB im Bereich des Einlaufs 5 die ersten Laufrollen 34, 36 an dem ersten Anlageabschnitt 30.11, 31.11 anliegen und in einer ersten Drehrichtung D1 drehen und die zweiten Laufrollen 35, 37 an einem zweiten Anlagenabschnitt 30.21, 31.21 anliegen und in einer der ersten Drehrichtung D1 entgegengesetzten zweiten Drehrichtung D2 drehen, bevor die ersten Laufrollen 34, 36 im Bereich der rampenförmigen Stufenabschnitte 9 von dem ersten Anlageabschnitt 30.11, 31.11 freikommen, um ihre Drehrichtung in die zweite Drehrichtung D2 zu ändern, indem die ersten Laufrollen 34, 36 nach Durchlaufen der rampenförmigen Stufenabschnitte 9 in kontaktschlüssige Anlage mit dem dritten Anlagenabschnitt 30.31, 31.31 gelangen.

Mehr im Detail ist der erste bis vierte Anlagenabschnitt 30.11, 30.21, 30.31, 30.41, 31.11 31.21, 31.31, 31.41 der ersten und zweiten Führungsfläche 30.1 und 30.2 bzw. 31.1 und 31.2 entlang des Verbindungsabschnittes VB zwischen dem Einlauf 5 und dem Auslauf 6 in Transportrichtung A derart rampenförmig gestuft ausgebildet, dass während einer Bewegung der Transportpalette 3 in Transportrichtung A entlang des Verbindungsabschnittes VB im Bereich des Einlaufs 5 die zweiten Laufrollen 35, 37 an dem zweiten Anlageabschnitt 30.21, 31.21 anliegen und in einer zweiten Drehrichtung D2 drehen und die ersten Laufrollen 34, 36 an einem ersten Anlagenabschnitt 30.11, 31.11 anliegen und in einer der zweiten Drehrichtung D2 entgegengesetzten ersten Drehrichtung D1 drehen, bevor die zweiten Laufrollen 35, 37 im Bereich der rampenförmigen Stufenabschnitte 9 von dem zweiten Anlageabschnitt 30.21, 31.21 freikommen, um ihre Drehrichtung in die erste Drehrichtung D1 zu ändern, indem die zweiten Laufrollen 35, 37 nach Durchlaufen der rampenförmigen Stufenabschnitte 9 in kontaktschlüssige Anlage mit dem vierten Anlagenabschnitt 30.41, 31.41 gelangen.

Vorteilhaft sind die rampenförmigen Stufenabschnitte 9 der ersten bis vierten Anlagenabschnitts 30.11, 30.21, 30.31, 30.41, 31.11 31.21, 31.31, 31.41 derart ausgebildet, dass während einer Bewegung der Transportpalette 3 zwischen dem Einlauf 5 und dem Auslauf 6 des Verbindungsabschnittes VB zunächst eine Drehrichtungsänderung der ersten Laufrollen 34, 36 von der ersten Drehrichtung D1 in die zweite Drehrichtung D2 vollzogen wird, bevor nach Abschluss der Drehrichtungsänderung der ersten Laufrollen 34, 36 eine Drehrichtungsänderung der zweiten Laufrollen 35, 37 von der zweiten Drehrichtung D2 in die erste Drehrichtung D1 eingeleitet wird.

In anderen Worten ist also der Verbindungsabschnitt 9 derart rampenförmig gestuft ausgebildet, dass zunächst die Drehrichtung der ersten Laufrollen 34, 36 von einer ersten Drehrichtung D1 in eine zweite Drehrichtung D2 änderbart ist und erst nach Abschluss der Drehrichtungsänderung der ersten Laufrollen 34, 36 die Drehrichtungsänderung der zweiten Laufrollen 35, 37 von der zweiten Drehrichtung D2 in die erste Drehrichtung D1 einleitbar ist.

Mehr im Detail erstrecken sich die rampenförmigen Stufenabschnitte 9 des ersten und dritten Anlagenabschnittes 30.11, 31.11 und 31.31, 30.31 entlang der ersten Hälfte H1 des Verbindungsabschnittes VB und die rampenförmigen Stufenabschnitte 9 des zweiten und vierten Anlageabschnittes 30.21, 31.21 und 31.41, 30.41 entlang der zweiten Hälfte H2 des Verbindungsabschnittes VB.

Vorteilhaft ist der erste und dritte Anlagenabschnitt 30.11, 31.11 und 31.31, 30.31 entlang der ersten Hälfte H1 rampenförmig gestuft und in der zweiten Hälfte 2 geradlinig ausgebildet und der zweite und vierte Anlageabschnitt 30.21, 31.21 und 31.41, 30.41 entlang der zweiten Hälfte H2 geradlinig und in der ersten Hälfe H1 rampenförmig gestuft ausgebildet.

Dabei zeigt die Figur 6 eine Ausführungsvariante der Transportpaletten 3, bei der sich zwischen zwei benachbarten Gelenkachsen GAS an der der Oberseite 3.1 gegenüberliegenden Unterseite 3.2 zwei weitere drehbare Laufrollen 50, 51 an der entsprechenden Transportpalette 3 angeordnet befinden, die in der darstellten Ausführungsvariante zur vertikalen Führung der Transportpaletten 3 zwischen der ersten und zweiten Führungseinrichtung 30, 31 sowie einer zwischen den beiden Laufrollen 50, 51 vorgesehenen weiteren Führungsschiene 52 geführt sind. Die Führungsschiene 52 kann dabei an der ersten und zweiten Führungseinrichtung 30, 31, insbesondere an deren Unterseite, die beispielsweise einen Führungseinrichtungsboden ausbildet, angeordnet, insbesondere verschraubt sein. Insbesondere liegen die beiden Rollenlagen 50,51 hierfür insbesondere an der sich parallel zur Transportrichtung A erstreckenden mittleren Führungsschiene 52 und wälzen bzw. rollen sich an dieser ab.

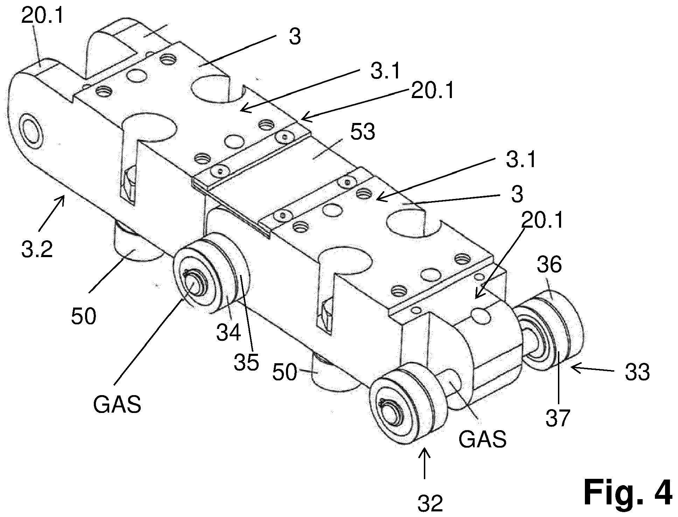

Figur 4 zeigt in perspektivischer Darstellung eine beispielhafte Ausführungsvariante zweier freigestellter und gelenkig über ein Kettengelenk 4 miteinander verbundener Transportpaletten 3 des erfindungsgemäßen Transportsystems 1. Insbesondere weisen die Transportpaletten 3 dabei in ihrem jeweiligen Gelenkabschnitt 20.1 an ihren jeweiligen Oberseiten 3.1 einen elastischen Verbindungsabschnitt 53 auf, der den jeweiligen Gelenkabschnitt 20.1 zweier benachbarter Transportpaletten 3 elastisch überspannt. Insbesondere kann der Verbindungsabschnitt 53 elastisch vorgespannt an den jeweiligen Oberseiten 3.1 zweier benachbarter Transportpaletten 3 angeordnet, insbesondere angenietet, sein. Der Verbindungsabschnitt 53 kann aus einem elastischen natürlichen und/oder künstlichen Textilgewebe hergestellt sein.

Die Erfindung wurde voranstehend an einem Ausführungsbeispiel beschrieben. Es versteht sich, dass zahlreiche Änderungen möglich sind, ohne dass dadurch der der Erfindung zugrundliegende Erfindungsgedanke verlassen wird.

## Patentansprüche

1. Transportsystem (1) zur Beförderung von Gegenständen entlang einer Transportstrecke (TS), umfassend wenigstens eine in zumindest einer Transportrichtung (A) entlang einer geschlossenen Bewegungsbahn (BA) der Transportstrecke (TS) getaktet umlaufend angetriebene Transportpalette (3), wobei die Bewegungsbahn (BA) zumindest einen konkaven Bewegungsbahnabschnitt (BAK) und wenigstens einen konvexen Bewegungsbahnabschnitt (BAX) für die Transportpalette (3), sowie einen die Bewegungsbahnabschnitte (BAK, BAX) verbindenden Verbindungsabschnitt (VB) aufweist, wobei die wenigstens eine Transportpalette (3) zumindest entlang des Verbindungsabschnittes (VB) beidseitig mittels einer ersten und zweiten Führungseinrichtung (30, 31) geführt ist, wobei die Transportpalette (3) zumindest eine zwischen der ersten und zweiten Führungseinrichtung (30, 31) verlaufende Achse (GAS) aufweist, die an einem ersten freien Ende (GAS1) mit einer ersten Führungs- und Lagereinrichtung (32) in der ersten Führungseinrichtung (30) und an einem zweiten freien Ende (GAS2) mit einer zweiten Führungs- und Lagereinrichtung (33) in der zweiten Führungseinrichtung (31) geführt ist, wobei die erste und zweite Führungs- und Lagereinrichtung (32, 33) jeweils wenigstens eine erste und zweite Laufrolle (34...37) umfassen, die zwischen einem Einlauf (5) und einem in Transportrichtung (A) auf den Einlauf (5) nachfolgenden Auslauf (6) des Verbindungsabschnittes (VB) zwischen einer ersten und zweiten, einander gegenüberliegenden und parallel zur Achse (GAS) verlaufenden Führungsfläche (30.1 und 30.2 bzw. 31.1 und 31.2) der jeweiligen Führungseinrichtung (30, 31) derart geführt sind, dass am Einlauf (5) des Verbindungsabschnittes (VB) die erste Laufrolle (34, 36) in einem ersten Anlageabschnitt (30.11, 31.11) der ersten Führungsfläche (30.1, 31.1) und die zweite Laufrolle (35, 37) in einem zweiten Anlageabschnitt (30.21, 31.21) der zweiten Führungsfläche (30.2, 31.2) anliegen und zueinander vorgespannt geführt sind, wobei der erste und zweite Anlageabschnitt (30.11 und 30.21 bzw. 31.11 und 31.21) entlang der Achse (GAS) zueinander versetzt und einander gegenüberliegend vorgesehen sind,
und dass am Auslauf (6) des Verbindungsabschnittes (VB) die erste Laufrolle (34, 36) in einem dritten Anlageabschnitt (30.31, 31.31) der ersten Führungsfläche (30.1, 31.1) und die zweite Laufrolle (35, 37) in einem vierten Anlageabschnitt (30.41, 31.41) der zweiten Führungsfläche (30.2, 31.2) anliegen und zueinander vorgespannt geführt sind, wobei der dritte und vierte Anlageabschnitt (30.31 und 30.41 bzw. 31.31 und 31.41) entlang der Achse (GAS) zueinander versetzt und einander gegenüberliegend vorgesehen sind.

2. Transportsystem nach Anspruch 1, **dadurch gekennzeichnet, dass** erste bis vierte Anlagenabschnitt (30.11, 30.21, 30.31, 30.41, 31.11 31.21, 31.31, 31.41) der ersten und zweiten Führungsfläche (30.1 und 30.2 bzw. 31.1 und 31.2) entlang des Verbindungsabschnittes (VB) zwischen dem Einlauf (5) und dem Auslauf (6) in Transportrichtung (A) derart gestuft ausgebildet ist, dass während einer Bewegung der Transportpalette (3) in Transportrichtung (A) entlang des Verbindungsabschnittes (VB) eine jede der Laufrollen (34...37) von dem entsprechenden ersten und zweiten Anlagenabschnitt (30.11 und 30.21 bzw. 31.11 und 31.21) freikommt, um eine Drehrichtung der entsprechenden Laufrolle (34...37) zu ändern, und anschließend an dem dritten und vierten Anlagenabschnitt (30.31 und 30.41 bzw. 31.31 und 31.41) zur Anlage gelangt, wobei zu jedem Zeitpunkt während der Bewegung der Transportpalette (3) durch den Verbindungsabschnitt (VB) stets von beiden Führungs- und Lagereinrichtungen (32, 32) der Transportpalette (3) jeweils immer mindestens eine Rolle (34...36) für die Positionierung und Fixierung der Transportpalette (3) an einem entsprechenden ersten bis vierten Anlagenabschnitt (30.11, 30.21, 30.31, 30.41, 31.11 31.21, 31.31, 31.41) der ersten und zweiten Führungsfläche (30.1 und 30.2 bzw. 31.1 und 31.2) kontaktschlüssig anliegt.

3. Transportsystem nach Anspruch 1 oder 2, **dadurch gekennzeichnet, dass** der erste und vierte Anlageabschnitt (30.11, 31.11 und 30.41, 31.41) der ersten Führungsfläche (30.1, 31.1) der ersten und zweiten Führungseinrichtung (30 und 31) entlang der Achse (GAS) gestuft ausgebildet ist und/oder dass der zweite und dritte Anlageabschnitt (30.21, 31.21 und 30.31, 31.31) der zweiten Führungsfläche (30.2, 31.2) der ersten und zweiten Führungseinrichtung (30 und 31) entlang der Achse (GAS) gestuft ausgebildet ist.

4. Transportsystem nach einem der vorangehenden Ansprüche, **dadurch gekennzeichnet, dass** der erste bis vierte Anlageabschnitt (30.11, 30.21, 30.31, 30.41, 31.11 31.21, 31.31, 31.41) der ersten und zweiten Führungseinrichtung (30, 31) im Bereich des Einlaufs (5) des Verbindungsabschnittes (VB) entlang der Achse (GAS) derart gestuft ausgebildet, dass die jeweils erste Führungsrolle (34, 36) der ersten und zweiten Führungs- und Lagereinrichtung (32, 33) an dem jeweils ersten Anlageabschnitt (30.11, 31.11) anliegt und gleichzeitig von dem jeweils dritten Anlageabschnitt (30.31, 31.31) freikommt und die jeweils zweite Führungsrolle (35, 37) an dem jeweils zweiten Anlageabschnittes (30.21, 31.21) anliegt und gleichzeitig von dem jeweils vierten Anlageabschnittes (30.41, 31.41) freikommt.

5. Transportsystem nach einem der vorangehenden Ansprüche, **dadurch gekennzeichnet**, der erste bis vierte Anlageabschnitt (30.11, 30.21, 30.31, 30.41, 31.11 31.21, 31.31, 31.41) der ersten und zweiten Führungseinrichtung (30, 31) im Bereich des Auslaufs (6) des Verbindungsabschnittes (VB) entlang der Achse (GAS) derart gestuft ausgebildet, dass die jeweils erste Führungsrolle (34, 36) der ersten und zweiten Führungs- und Lagereinrichtung (32, 33) an dem jeweils dritten Anlageabschnitt (30.31, 31.31) anliegt und gleichzeitig von dem jeweils ersten Anlageabschnitt (30.11, 31.11) freikommt und die jeweils zweite Führungsrolle (35, 37) an dem jeweils vierten Anlageabschnittes (30.41, 31.41) anliegt und gleichzeitig von dem jeweils zweiten Anlageabschnittes (30.21, 31.21) freikommt.

6. Transportsystem nach einem der vorangehenden Ansprüche, **dadurch gekennzeichnet, dass** der erste bis vierte Anlagenabschnitt (30.11, 30.21, 30.31, 30.41, 31.11 31.21, 31.31, 31.41) der ersten und zweiten Führungsfläche (30.1 und 30.2 bzw. 31.1 und 31.2) entlang des Verbindungsabschnittes (VB) zwischen dem Einlauf (5) und dem Auslauf (6) in Transportrichtung (A) rampenförmige Stufenabschnitte (9) aufweisen, die vorzugsweise gradlinig und/oder sinusförmig ausgebildet sind.

7. Transportsystem nach einem der vorangehenden Ansprüche, **dadurch gekennzeichnet, dass** der erste bis vierte Anlagenabschnitt (30.11, 30.21, 30.31, 30.41, 31.11 31.21, 31.31, 31.41) der ersten und zweiten Führungsfläche (30.1 und 30.2 bzw. 31.1 und 31.2) entlang des Verbindungsabschnittes (VB) zwischen dem Einlauf (5) und dem Auslauf (6) in Transportrichtung (A) derart rampenförmig gestuft ausgebildet ist, dass während einer Bewegung der Transportpalette (3) in Transportrichtung (A) entlang des Verbindungsabschnittes (VB) im Bereich des Einlaufs (5) die ersten Laufrollen (34, 36) an dem ersten Anlageabschnitt (30.11, 31.11) anliegen und in einer ersten Drehrichtung (D1) drehen und gleichzeitig die zweiten Laufrollen (35, 37) an einem zweiten Anlagenabschnitt (30.21, 31.21) anliegen und in einer der ersten Drehrichtung (D1) entgegengesetzten zweiten Drehrichtung (D2) drehen, bevor die ersten Laufrollen (34, 36) im Bereich der rampenförmigen Stufenabschnitte (9) von dem ersten Anlageabschnitt (30.11, 31.11) freikommen, um ihre Drehrichtung in die zweite Drehrichtung (D2) zu ändern, indem die ersten Laufrollen (34, 36) nach Durchlaufen der rampenförmigen Stufenabschnitte (9) in kontaktschlüssige Anlage mit dem dritten Anlagenabschnitt (30.31, 31.31) gelangen.

8. Transportsystem nach einem der vorangehenden Ansprüche, **dadurch gekennzeichnet, dass** der erste bis vierte Anlagenabschnitt (30.11, 30.21, 30.31, 30.41, 31.11 31.21, 31.31, 31.41) der ersten und zweiten Führungsfläche (30.1 und 30.2 bzw. 31.1 und 31.2) entlang des Verbindungsabschnittes (VB) zwischen dem Einlauf (5) und dem Auslauf (6) in Transportrichtung (A) derart rampenförmig gestuft ausgebildet ist, dass während einer Bewegung der Transportpalette (3) in Transportrichtung (A) entlang des Verbindungsabschnittes (VB) im Bereich des Einlaufs (5) die zweiten Laufrollen (35, 37) an dem zweiten Anlageabschnitt (30.21, 31.21) anliegen und in einer zweiten Drehrichtung (D2) drehen und die ersten Laufrollen (34, 36) an einem ersten Anlagenabschnitt (30.11, 31.11) anliegen und in einer der zweiten Drehrichtung (D2) entgegengesetzten ersten Drehrichtung (D1) drehen, bevor die zweiten Laufrollen (35, 37) im Bereich der rampenförmigen Stufenabschnitte (9) von dem zweiten Anlageabschnitt (30.21, 31.21) freikommen, um ihre Drehrichtung in die erste Drehrichtung (D1) zu ändern, indem die zweiten Laufrollen (35, 37) nach Durchlaufen der rampenförmigen Stufenabschnitte (9) in kontaktschlüssige Anlage mit dem vierten Anlagenabschnitt (30.41, 31.41) gelangen.

9. Transportsystem nach einem der vorangehenden Ansprüche, **dadurch gekennzeichnet, dass** die rampenförmigen Stufenabschnitte (9) der ersten bis vierten Anlagenabschnitts (30.11, 30.21, 30.31, 30.41, 31.11 31.21, 31.31, 31.41) derart ausgebildet sind, dass während einer Bewegung der Transportpalette (3) zwischen dem Einlauf (5) und dem Auslauf (6) des Verbindungsabschnittes (VB) zunächst eine Drehrichtungsänderung der ersten Laufrollen (34, 36) von der ersten Drehrichtung (D1) in die zweite Drehrichtung (D2) vollzogen wird, bevor nach Abschluss der Drehrichtungsänderung der ersten Laufrollen (34, 36) eine Drehrichtungsänderung der zweiten Laufrollen (35, 37) von der zweiten Drehrichtung (D2) in die erste Drehrichtung (D1) eingeleitet wird.

10. Transportsystem nach einem der vorangehenden Ansprüche, **dadurch gekennzeichnet, dass** sich die rampenförmigen Stufenabschnitte (9) des ersten und dritten Anlagenabschnittes (30.11, 31.11 und 31.31, 30.31) entlang der ersten Hälfte (H1) des Verbindungsabschnittes (VB) und die rampenförmigen Stufenabschnitte (9) des zweiten und vierten Anlageabschnittes (30.21, 31.21 und 31.41, 30.41) entlang der zweiten Hälfte (H2) des Verbindungsabschnittes (VB) erstecken.

11. Transportsystem nach einem der vorangehenden Ansprüche, **dadurch gekennzeichnet, dass** der erste und dritte Anlagenabschnitt (30.11, 31.11 und 31.31, 30.31) entlang der ersten Hälfte (H1) rampenförmig gestuft und in der zweiten Hälfte (H2) geradlinig ausgebildet ist und der zweite und vierte Anlageabschnitt (30.21, 31.21 und 31.41, 30.41) entlang der zweiten Hälfte (H2) geradlinig und in der ersten Hälfe (H1) rampenförmig gestuft ausgebildet ist.

12. Transportsystem nach einem der vorangehenden Ansprüche, **dadurch gekennzeichnet, dass** der Verbindungsabschnitt (VB) zwischen dem konkaven Bewegungsbahnabschnitt (BAK) und dem konvexen Bewegungsbahnabschnitt (BAX) und/oder zwischen dem konvexen Bewegungsbahnabschnitt (BAX) und dem konkaven Bewegungsbahnabschnitt (BAK) vorgesehen ist.

13. Transportsystem nach einem der vorangehenden Ansprüche, **dadurch gekennzeichnet, dass** die Bewegungsbahn (BA) mehrfach gekrümmt und umlenkt über sowohl konvexe Bewegungsbahnabschnitte (BAX), als auch konkave Bewegungsbahnabschnitte (BAK) ausgebildet ist.
